Europäisches Patentamt

European Patent Office

Office européen des brevets

(11) Numéro de publication: **0 369 843 B1**

(19)

# FASCICULE DE BREVET EUROPEEN

(45) Date de publication de fascicule du brevet: **18.05.94**  (51) Int. Cl.⁵: **G06F 15/76**, G06F 15/16

(21) Numéro de dépôt: **89402917.2**

(22) Date de dépôt: **24.10.89**

(54) **Unité centrale à plusieurs processeurs et plusieurs mémoires pour systèmes de traitement de données.**

(30) Priorité: **25.10.88 FR 8813904**

(43) Date de publication de la demande:
**23.05.90 Bulletin 90/21**

(45) Mention de la délivrance du brevet:
**18.05.94 Bulletin 94/20**

(84) Etats contractants désignés:
**DE FR GB IT NL**

(56) Documents cités:
EP-A- 0 201 088
US-A- 3 735 362
US-A- 4 334 305

K. HWANG et al.: "Computer architecture
and parallel processing", 1984, pages
145-164, McGraw-Hill Book Co., US

(73) Titulaire: **BULL S.A.**
**Tour BULL,**
**1, place Carpeaux**
**F-92800 Puteaux(FR)**

(72) Inventeur: **Keryvel, Georges**
**25, avenue de la Grande Armée**
**F-75016 Paris(FR)**
Inventeur: **Thomas, Jean-Louis**
**25, Avenue de la Grande Armée**
**F-75016 Paris(FR)**

(74) Mandataire: **Colombe, Michel et al**
**Bull S.A.**
**Tour BULL Cédex 74**
**PC/TB2803**
**F-92039 Paris La Défense (FR)**

## Description

L'invention se situe dans le domaine des systèmes de traitement de l'information et notamment des systèmes à haute performance utilisant plusieurs processeurs pouvant fonctionner simultanément pour exécuter un programme commun.

L'invention concerne plus particulièrement une architecture d'unité centrale pouvant servir d'unité vectorielle d'un calculateur vectoriel.

Pour augmenter les performances des grands ordinateurs scientifiques, on a été amené à multiplier le nombre de processeurs de façon à ce que ceux-ci puissent travailler simultanément. Cette méthode appelée "parallélisation", permet théoriquement d'obtenir un temps de cycle global égal au temps de cycle d'un processeur élémentaire divisé par le nombre de processeurs du système.

Toujours pour diminuer le temps de cycle, une autre approche consiste à utiliser plusieurs processeurs élémentaires organisés en "pipeline".

En réalité, la performance d'un processeur vectoriel dépend aussi du taux de vectorisation que le compilateur peut obtenir pour l'application donnée. Ce problème concerne essentiellement les techniques de programmation et de compilation et par conséquent sortent du cadre de la présente invention. Dans la suite de l'exposé, nous ferons donc abstraction de cette question pour nous préoccuper essentiellement de l'architecture physique.

La performance d'un système dépend également de la performance des mémoires avec lesquelles les processeurs doivent communiquer. La performance d'une mémoire ou d'un ensemble de mémoires est définie par son temps d'accès et son temps de cycle. Le temps d'accès est défini comme étant l'intervalle de temps qui sépare l'envoi d'une requête par l'un des processeurs et l'apparition d'un signal d'acquittement indiquant que la demande est prise en compte par la mémoire et ainsi qu'une nouvelle demande peut lui être adressée. Le temps de cycle définit l'intervalle de temps qui sépare le moment où une demande est reçue par la mémoire et l'instant où la réponse est disponible dans le registre de sortie de la mémoire.

Selon l'évolution actuelle dans la conception des grands ordinateurs, il est nécessaire de disposer de mémoires ayant des capacités de plus en plus importantes. Cependant il faut aussi que les mémoires associées aux processeurs aient des performances compatibles avec celles des processeurs. On cherche donc à réaliser des mémoires présentant un temps d'accès et un temps de cycle le plus court possible. Dans ce but, une solution classique consiste à utiliser une mémoire constituée de plusieurs modules et à effectuer un adressage entrelacé de ces modules. Selon cette technique d'entrelacement, des demandes successives ou simultanées envoyées par les processeurs s'adressent successivement ou simultanément à des modules différents de la mémoire.

Grâce aux techniques du "pipeline" et de l'entrelacement, on arrive à réduire les temps de cycle des processeurs et des mémoires.

Pour augmenter encore les performances du système en mode vectoriel, on cherche à paralléliser davantage son fonctionnement. Pour cela, on utilise une pluralité de processeurs de type "pipeline" et une pluralité de mémoires entrelacées. Cependant, la réalisation d'un tel système doit tenir compte du temps de cycle très faible des mémoires et des processeurs. En particulier, un problème important est celui de la réalisation des liaisons entre les processeurs et les mémoires.

La solution du bus partagé par les processeurs et les mémoires interdit les échanges simultanés entre plusieurs processeurs et plusieurs mémoires. Le bus est donc inadapté au fonctionnement parallèle. La solution la plus couramment utilisée consiste à prévoir un réseau d'interconnexion du type "crossbar" ou dérivé qui permet ces liaisons simultanées. Cette solution est toutefois limitée par l'augmentation de la complexité du dispositif d'interconnexion lorsque les temps de cycle diminuent et lorsque le taux de parallélisation augmente. En effet, un réseau "crossbar" implique une centralisation des chemins qui a les effets défavorables suivants :

- augmentation de la connectique qui est d'autant plus importante lorsque les chemins sont larges ;
- allongement des connexions lorsque la taille des mémoires augmente, avec un effet défavorable sur les débits et les temps d'accès ;
- intégration difficile car le pourcentage de connexion est élevé par rapport aux fonctions logiques associées ;
- nécessité d'une gestion des commandes centralisée, ce qui entraîne des difficultés dans la gestion des flots de données et des conflits ;
- absence de modularité ;
- difficulté de mettre en oeuvre des redondances pour permettre des reconfigurations.

L'invention a pour but de remédier à ces inconvénients et plus particulièrement de réaliser un dispositif assurant les mêmes possibilités de liaison qu'un réseau "crossbar" et ayant le même débit crête.

Pour atteindre ce but et selon l'invention dans son aspect le plus général, les échanges entre processeurs et mémoires se font d'abord en mode message. Ainsi, pour envoyer un ordre de lecture ou d'écriture, chaque processeur émet une demande contenant une adresse permettant d'identifier la mémoire concernée. D'autre part, la liaison entre les processeurs et les mémoires est réalisée au moyen d'un anneau de stations pouvant fonctionner en registre à décalage rebouclé dont chaque étage peut mémoriser une demande, cette demande étant accompagnée d'un indicateur de validité. En outre, la sortie de chaque station est reliée, directement ou non, à l'interface d'entrée d'une mémoire. Enfin, chaque station peut être accédée, sous le contrôle d'un dispositif de contrôle de la station, par des demandes issues d'un processeur associé.

Ainsi, lorsque les demandes sont bien cadrées, c'est-à-dire lorsque chaque processeur s'adresse à sa mémoire associée, les accès des demandes sont parallèles et directs comme pour une interconnexion "crossbar". Par contre, pour les autres modes de fonctionnement, l'accès au registre à décalage des nouvelles demandes issues des processeurs est conditionné par la libération par les mémoires d'étages du registre.

La solution proposée présente une gestion décentralisée et une implantation physique distribuée rendant la réalisation et la modularité plus aisées. De plus les possibilités de reconfiguration sont plus souples.

Plus précisément l'invention a pour objet une unité centrale pour système de traitement de données comportant plusieurs processeurs reliés à plusieurs mémoires, lesdits processeurs fonctionnant en émetteurs de demandes alors que les mémoires fonctionnent en récepteurs desdites demandes, lesdites demandes comportant des informations de commande, d'adressage et éventuellement des données, des moyens d'interconnexion d'entrée étant prévus pour transmettre auxdites mémoires les demandes desdits processeurs, des moyens d'interconnexion de sortie étant prévus pour transmettre auxdits processeurs les réponses desdites mémoires auxdites demandes, lesdits moyens d'interconnexion d'entrée comportant plusieurs interfaces d'entrée parallèles, chaque interface d'entrée fournissant pour chaque demande reçue un signal d'acquittement des demandes représentatif de l'acceptation par ladite interface d'entrée de ladite demande reçue, ladite unité centrale étant caractérisée en ce que chaque demande est associée à un indicateur de demande dont la valeur logique est représentative de la validité de la demande associée, en ce que les moyens d'interconnexion d'entrée comportent des stations d'entrée associées chacunes à un processeur et à une interface d'entrée, en ce que chaque station comporte au moins un registre capable de mémoriser une demande et son indicateur de demande associé, une première entrée d'accès audit registre et une sortie reliée à la sortie dudit registre, en ce que lesdites stations sont montées en cascade, la sortie de la dernière station étant reliée à la première entrée de la première station de façon à former un anneau de stations d'entrée pouvant fonctionner en registre à décalage rebouclé, en ce que chaque station comporte une deuxième entrée reliée à la sortie du processeur associé en ce que chaque station comporte un dispositif de contrôle dont une entrée reçoit l'indicateur de demande contenu dans la station située en amont et dont une seconde entrée, appelée entrée d'acquittement, reçoit le signal d'acquittement issu de l'interface associée à ladite station amont, le dispositif de contrôle autorisant le transfert dans le registre de la station associée :

- soit de la demande et de son indicateur contenus dans la station amont lorsque ladite demande est valide et n'est pas acceptée par l'interface associée à ladite station amont,
- soit de la demande et de son indicateur qui sont disponibles en sortie du processeur associé à ladite station dans le cas contraire,

et en ce que ledit dispositif de contrôle comporte une sortie de notification délivrant un signal de notification pour indiquer au processeur associé laquelle de ces deux demandes est acceptée.

Selon un cas particulier, chaque interface parallèle est simplement constituée par l'interface d'entrée d'une mémoire.

Bien que cette dernière réalisation soit très simple, elle favorise l'appel des opérandes bien cadrés en mémoires. Un décadrage va donc se traduire par une perte de débit. En effet, lorsque les demandes issues des processeurs sont bien cadrées, le premier processeur envoie une demande à la première mémoire, le second processeur envoie une demande à la seconde mémoire etc. Si par contre les demandes sont décadrées, le premier processeur pourra par exemple envoyer une demande à la troisième mémoire, le second processeur une demande à la quatrième mémoire etc. Il en résulte que, dans ce cas particulier, les processeurs ne pourront pas émettre pendant deux cycles d'horloge pour chaque demande acceptée. Aussi selon un autre aspect de l'invention, on augmente le nombre d'anneaux de stations de façon à augmenter le débit moyen dans le cas de demandes décadrées.

Pour cela, l'unité centrale est en outre caractérisée en ce que ledit dispositif d'interconnexion d'entrée est formé de plusieurs anneaux de stations disposés en autant de niveaux, chaque anneau de stations étant identique audit anneau de stations d'entrée, ledit anneau de stations d'entrée constituant le premier niveau, lesdites interfaces d'entrée parallèles étant alors formées par l'anneau de stations du second niveau, en ce que pour chaque mémoire une interface d'entrée mémoire délivre un signal d'acquittement mémoire, en ce que chaque station du dernier niveau a sa sortie reliée à l'interface d'entrée d'un mémoire associée et reçoit sur son entrée d'acquittement le signal d'acquittement mémoire de l'interface d'entrée mémoire qui est reliée à la station dudit dernier niveau et qui est située en amont de ladite station, en ce que chaque station d'un autre niveau a sa sortie reliée à la seconde entrée d'une station appartenant au niveau directement supérieur et reçoit sur son entrée d'acquittement le signal de notification issu de la station située en amont de ladite station appartenant audit niveau directement supérieur.

D'après cette dernière solution, nous constatons que si les demandes sont décadrées de 2 comme dans l'exemple précédent, les demandes issues des processeurs seront toujours bloquées durant deux cycles d'horloge mais pour un nombre de demandes proportionnel au nombre d'anneaux de stations. Il en résulte que le débit global est amélioré.

Deux cas particuliers de réalisation sont à remarquer. Le premier consiste à n'utiliser que deux anneaux de stations, ce qui présente l'avantage d'une simplification de réalisation. Un autre cas intéressant consiste à utiliser un nombre de stations égal au nombre de processeurs et de mémoires. Cette solution favorise la communication entre chaque processeur et sa mémoire associée.

Ce qui précède résoud le problème des transmissions des demandes issues des processeurs aux mémoires. Lorsque les mémoires ont reçu les demandes, celles-ci doivent ensuite transmettre leur réponse. Ceci est le cas lorsque les processeurs envoient des ordres de lecture aux mémoires. Les données lues dans les mémoires doivent alors être transférées aux processeurs. Les mémoires jouent alors le rôle d'émetteurs de réponses de la même façon que les processeurs jouaient le rôle d'émetteurs de demandes. Par conséquent, un dispositif d'interconnexion identique à l'un de ceux décrits précédemment pour les demandes pourra être utilisé pour la transmission des réponses.

Par conséquent, l'invention concerne également une unité centrale caractérisée en ce que ledit dispositif d'interconnexion de sortie est identique à l'un des dispositifs d'interconnexion d'entrée tel que défini précédemment, les rôles respectifs des processeurs et des mémoires étant inversés, les mémoires fonctionnant en émetteurs de réponses, les processeurs fonctionnant en récepteurs de réponses, lesdites réponses étant accompagnées d'un indicateur de validité des réponses.

D'autres caractéristiques et détails de réalisation de l'invention seront exposés dans la suite de la description en relation avec les figures où :

- la figure 1 représente de façon schématique une unité centrale servant de cadre à l'invention ;

- la figure 2 montre un schéma général de réalisation de la présente invention ;
- la figure 3 représente un mode de réalisation d'une station pour la mise en oeuvre de l'invention ;
- la figure 4 représente un cas particulier de réalisation de l'invention utilisant deux anneaux de stations d'entrée ;
- la figure 5 représente en partie un mode de réalisation utilisant une pluralité d'anneaux de stations d'entrée ;
- la figure 6 montre un détail de réalisation de l'interface d'entrée d'une mémoire ;
- la figure 7 représente un schéma d'ensemble de l'unité centrale selon l'invention dans un cas particulier.

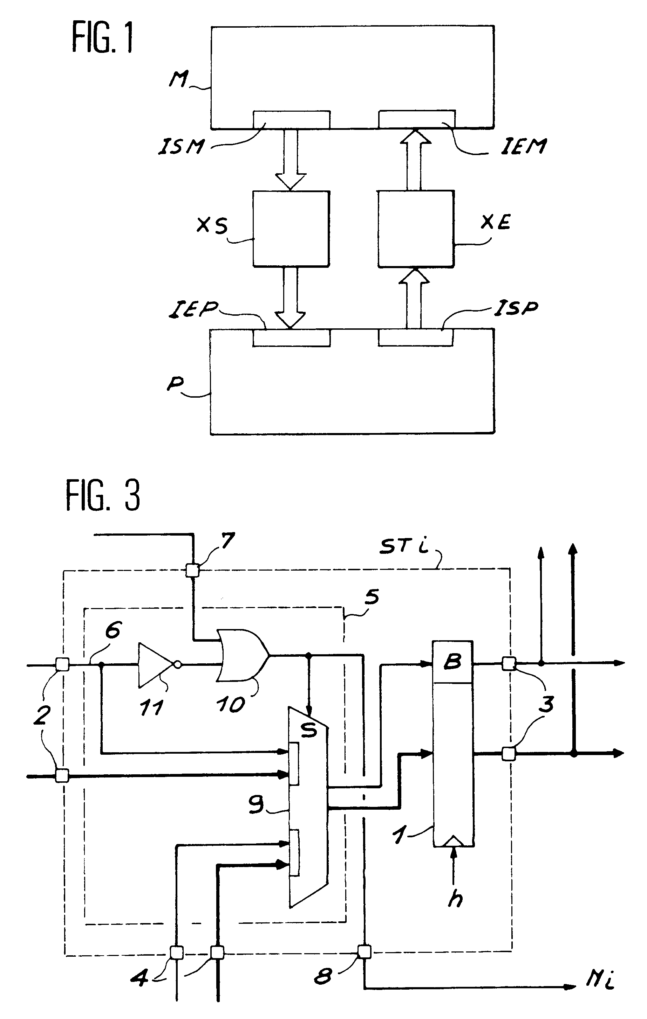

La figure 1 représente le schéma général d'une unité centrale de type classique et pouvant servir de cadre à l'invention.

L'unité centrale comporte une unité de traitement P constituée généralement de plusieurs processeurs fonctionnant en parallèle, chaque processeur pouvant être organisé en "pipeline". L'unité de traitement P communique avec un ensemble M de mémoires. L'ensemble M peut comprendre une pluralité de mémoires, appelées habituellement bancs logiques, ayant des accès indépendants, chaque banc logique pouvant être constitué par une pluralité de modules ou bancs physiques entrelacés.

Selon le schéma habituel, les processeurs engendrent simultanément des demandes mémoire qui sont disponibles en parallèle dans les interfaces de sortie des processeurs ISP. Ces demandes sont transférées vers les interfaces d'entrée des mémoires IEM par l'intermédiaire d'un système d'interconnexion d'entrée XE, dont le rôle est aussi de gérer les conflits qui peuvent survenir.

En fonction des demandes reçues, l'ensemble M de mémoires fournit dans des interfaces de sortie ISM les réponses correspondantes. Ces réponses sont transmises, par l'intermédiaire d'un dispositif d'interconnexion de sortie XS, aux interfaces d'entrée IEP de l'unité de traitement P. Le dispositif d'interconnexion de sortie XS a un rôle tout à fait symétrique de celui d'entrée XE.

Bien évidemment l'unité P communique avec l'extérieur au moyen d'unités d'entrée-sortie non représentées.

La performance d'un tel système est maximale lorsque l'unité traitement P envoie aux mémoires des demandes bien cadrées c'est-à-dire lorsque chaque demande d'une interface de sortie est destinée à un banc logique privilégié. Toutefois ce système doit pouvoir fonctionner dans des cas quelconques. Il en résulte des risques de conflit, par exemple lorsque plusieurs processeurs s'adressent au même banc logique. Par conséquent, le dispositif d'interconnexion d'entrée doit être capable de présenter un chemin entre un processeur quelconque et un banc logique quelconque et de détecter les conditions de conflits pour pouvoir les gérer ou les prévenir.

Il est clair que des problèmes identiques se posent au niveau de l'interconnexion de sortie XS.

Dans les systèmes connus jusqu'à présent, la solution consiste à utiliser comme dispositif d'interconnexion un système de type "crossbar" réalisé au moyen d'une pluralité de multiplexeurs. Sa gestion est effectuée à l'aide d'une logique associée. Cette solution présente toutefois des limites qui sont liées au taux de parallélisation, à la fréquence d'émission des demandes et des réponses, ainsi qu'à la largeur des chemins de données. En particulier, le problème de gestion des conflits devient très difficile à résoudre lorsque le nombre de processeurs et de mémoires devient élevé. La description qui va suivre montrera comment l'invention résoud ce problème.

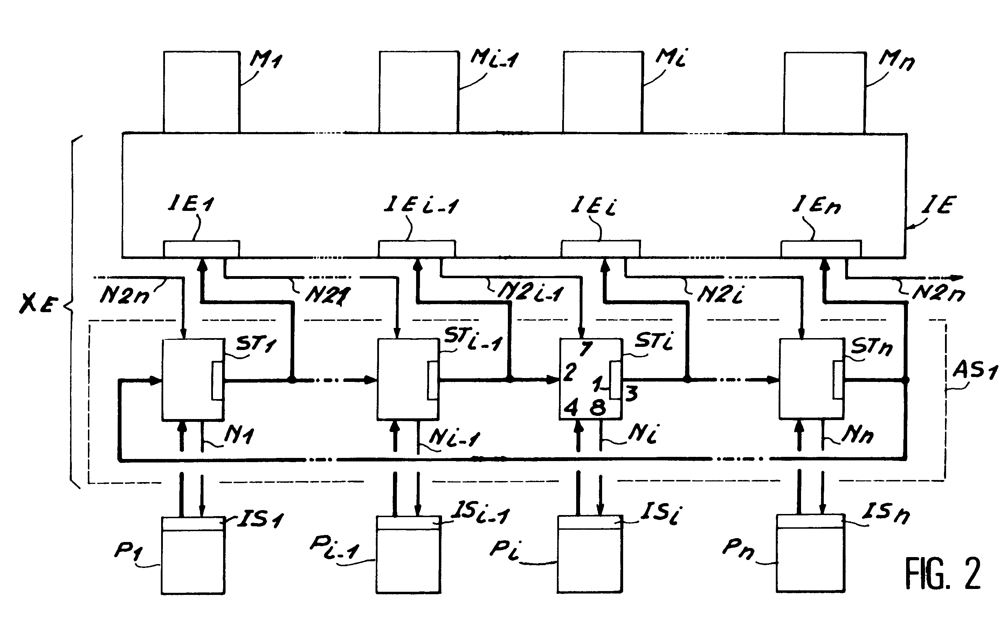

Sur la figure 2, n processeurs $P1,...P_{i-1},P_i,...P_n$ constituent l'unité de traitement P de la figure 1. L'ensemble M de mémoires est constitué par n bancs logiques $M_1,...M_{i-1},M_i,...M_n$. Pour simplifier la suite de l'exposé, les bancs logiques $M_i$ seront plus simplement désignés sous l'appelation "mémoire".

Chaque processeur comporte une interface de sortie $IS_1,...IS_{i-1},IS_i,...IS_n$. Ces interfaces $IS_i$ servent à la fois de tampons de sortie des demandes disponibles et de dispositifs de contrôle vis-à-vis des processeurs et du dispositif d'interconnexion d'entrée XE.

Le dispositif d'interconnexion d'entrée XE comprend une interface d'entrée IE composée de plusieurs interfaces d'entrée parallèles $IE_1,...IE_{i-1},IE_i,...IE_n$. Chaque interface d'entrée $IE_i$ reçoit les demandes en provenance des processeurs. Lorsqu'une interface $IE_i$ accepte une demande présente à son entrée, elle émet un signal d'acquittement $N2_i$ pour signaler si cette demande est acceptée ou non par l'interface.

Le dispositif d'interconnexion d'entrée XE comporte également un ensemble de stations d'entrée $ST_1,...ST_{i-1},ST_i,...ST_n$. Chaque station $ST_i$ contient au moins un registre 1 capable de mémoriser des demandes. Chaque station possède une première entrée 2 et une sortie 3 reliée à la sortie du registre 1. Ces stations sont montées en cascade, la sortie de la dernière station $ST_n$ étant reliée à la première entrée de la première station $ST_1$ de façon à permettre aux registres des stations de fonctionner, sous l'action d'un signal d'horloge non représenté, en registre à décalage rebouclé. Dans la suite, nous appellerons "anneau de stations" $AS_1$ cet ensemble de stations $ST_i$. La sortie 3 de chaque station $ST_i$ est d'autre part reliée à une interface d'entrée $IE_i$ associée. Chaque station $ST_i$ comporte aussi une seconde entrée 4 reliée à l'interface de sortie $IS_i$ d'un processeur associé $P_i$. Chaque station $ST_i$ est munie également d'un dispositif de contrôle, non représenté, permettant de mettre sélectivement en communication l'entrée du registre 1 avec la première entrée 2 ou la seconde entrée 4 de la station.

Les interfaces de sortie $IS_i$, les interfaces d'entrée $IE_i$ sont commandées par le signal d'horloge déjà mentionné. D'autre part, chaque demande est accompagnée d'un indicateur de validité B qui peut être fourni par le processeur qui émet la demande. Le dispositif de contrôle de chaque station $ST_i$ reçoit par une entrée d'acquittement 7 le signal d'acquittement $N2_{i-1}$ délivré par l'interface aval $IE_{i-1}$ ainsi que l'indicateur B contenu dans la station aval $ST_{i-1}$. Chaque station $ST_i$ comporte enfin une sortie de notification 8 reliée à l'interface de sortie $IS_i$ du processeur associé.

Le dispositif de la figure 2 fonctionne de la façon suivante.

En nous plaçant d'abord à l'état initial, les demandes contenues dans les registres sont supposées toutes non valides. En d'autres termes, l'indicateur B associé à chaque demande contenue dans l'anneau $AS_1$ a une première valeur logique qui indique une demande associée non valide.

Lorsque le système commence à fonctionner, chaque processeur $P_{i-1}$ place dans son interface de sortie $IS_{i-1}$ une demande valide. Le dispositif de contrôle de la station associée $ST_{i-1}$ détecte alors que la demande contenue dans le registre amont n'est pas valide et autorise le transfert de la demande du processeur $P_{i-1}$ dans le registre 1 de la station. Au cycle d'horloge suivant, chaque registre contient une demande valide. La demande contenue dans la station $ST_{i-1}$ est présentée à l'interface d'entrée $IE_{i-1}$. Si cette demande est bien destinée à l'interface, celle-ci délivre un signal d'acquittement $N2_{i-1}$ ayant une première valeur logique signifiant l'acceptation de la demande par l'interface. Pendant ce temps, une demande ultérieure est présente dans l'interface de sortie du processeur $P_i$. La station associée $ST_i$ détecte l'indicateur B de la demande contenue dans la station amont $ST_{i-1}$. L'indicateur signalant une demande valide, la station $ST_i$ en est informée. Mais la station $ST_i$ reçoit le signal d'acquittement $N2_{i-1}$ de l'interface aval $IE_{i-1}$ indiquant que cette demande sera acceptée par l'interface. Le dispositif de contrôle de la station $ST_i$ autorisera donc le transfert de la nouvelle demande du processeur $P_i$ dans son registre associé.

Le processus décrit précédemment se poursuivra aussi longtemps que chaque processeur $P_i$ adresse des demandes à son interface associée $IE_i$ et que cette interface accepte les demandes. Cette situation correspond au cas favorable où les demandes sont bien cadrées.

Si par contre l'un des processeurs, $P_{i-1}$ par exemple, avait envoyé une demande non cadrée, le registre de la station $ST_{i-1}$ contiendrait une demande qui n'est pas destinée à l'interface $IE_{i-1}$. Le signal d'acquittement $N2_{i-1}$ prendra alors une autre valeur logique correspondant à cette situation. La station aval $ST_i$ en tiendra compte et informe le processeur $P_i$ de cette situation par un signal de notification $N_i$ issu de la sortie 8 et délivré par le dispositif de contrôle de la station $ST_i$. Le signal de notification $N_i$ interdira donc au processeur $P_i$ d'émettre une nouvelle demande au cycle suivant. La demande contenue dans le registre de la station $ST_{i-1}$ sera alors transférée dans le registre de la station $ST_i$.

Bien entendu, si la demande contenue dans la station $ST_{i-1}$ n'est pas valide, le processeur $P_i$ est autorisé à émettre une nouvelle demande qui sera enregistrée dans la station $ST_i$. Cette situation peut se produire en particulier dans le cas d'un fonctionnement en mode non vectoriel où certains processeurs effectuent des accès mémoire alors que d'autres ne travaillent pas et par conséquent émettent en permanence des demandes non valides.

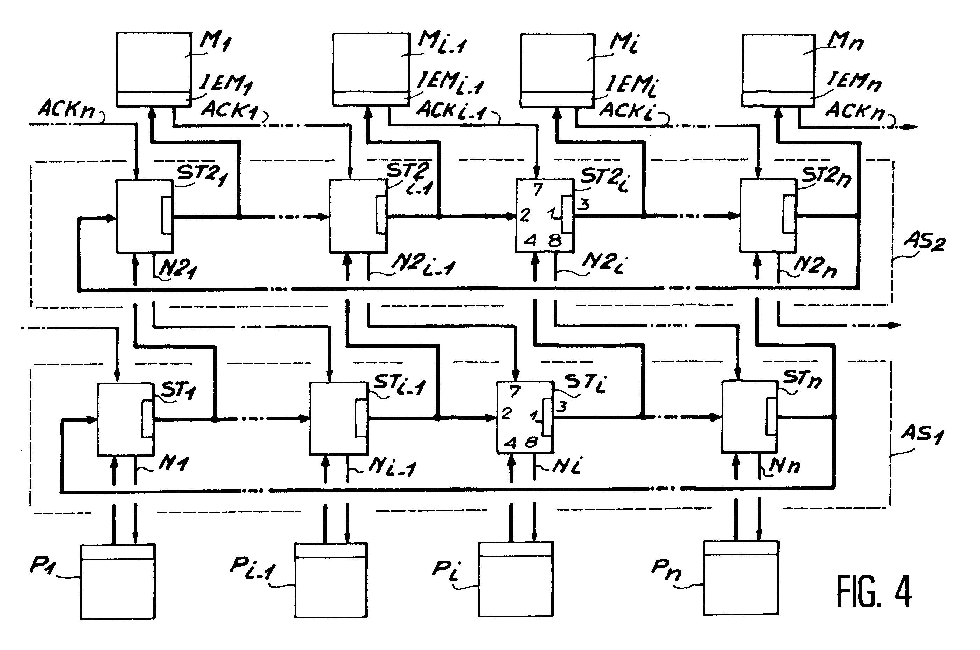

La figure 3 représente un exemple de réalisation des stations $ST_i$ Le registre 1 de la station $ST_i$ comporte plusieurs bascules commandées par le signal d'horloge h. L'une des bascules est affectée à l'indicateur B. La sortie du registre 1 constitue la sortie 3 de la station. Le dispositif de contrôle 5 comporte un dispositif de sélection tel qu'un multiplexeur 9 et un dispositif de commande formé par les circuits logiques 10 et 11. L'entrée du registre 1 est reliée à la sortie du multiplexeur 9 dont une première entrée "0" est reliée à la première entrée 2 de la station et dont une seconde entrée "1" est reliée à la seconde entrée 4 de la station. Le multiplexeur 9 est commandé par un signal binaire de sélection S fourni par le dispositif de commande 10 et 11. Lorsque le signal S prend la valeur 1 logique, le multiplexeur 9 met en communication l'entrée 4 avec l'entrée du registre 1. Si S vaut 0, l'entrée 2 est mise en communication avec l'entrée du registre 1.

Dans l'exemple représenté, nous avons également supposé que l'indicateur B est un élément binaire qui, lorsqu'il prend la valeur 1 logique, indique que la demande est valide. Lorsque l'indicateur prend la valeur 0 logique la demande associée n'est pas valide. Compte tenu de cette convention, le dispositif de commande est constitué d'un inverseur 11 dont l'entrée 6 reçoit l'indicateur B contenu dans la station aval. La sortie de l'inverseur 11 est reliée à une première entrée d'une porte OU 10 dont la seconde entrée est reliée à l'entrée d'acquittement 7 de la station. La porte OU 10 délivre alors le signal de sélection S décrit précédemment. Ce signal S est également appliqué à la sortie de notification 8 de la station et constituera donc aussi le signal de notification $N_i$.

Le mode de réalisation le plus simple du dispositif de la figure 2 consiste à utiliser directement comme interfaces d'entrée parallèles $IE_i$ les interfaces d'entrée des mémoires. Cette solution a l'avantage de la simplicité de réalisation mais présente l'inconvénient d'abaisser le débit dans le cas de demandes décadrées. En effet, avec un décadrage d (compris entre 1 et n-1), chaque processeur $P_i$ ne s'adresse pas à sa mémoire associée $M_i$ mais à la mémoire $M_{i+d}$. Après l'envoi d'une première demande, les processeurs seront bloqués pendant d temps de cycle avant de pouvoir émettre leur demande suivante. Il en résulte une baisse de débit d'autant plus importante que le décadrage d est grand.

Selon des variantes de réalisation de l'invention, ce problème peut être résolu en ajoutant des anneaux de stations supplémentaires.

En nous référant maintenant à la figure 4, nous allons décrire dans un premier temps le cas particulier où on utilise seulement deux anneaux de stations.

Nous retrouvons les processeurs $P_i$ et les mémoires $M_i$. Le premier anneau de stations $AS_1$ est identique à celui décrit à la figure 2 et l'interface d'entrée IE est maintenant réalisée au moyen d'un second anneau de stations $AS_2$ identique au premier anneau $AS_1$. Chaque station $ST_i$ du premier anneau $AS_1$ a sa sortie 3 reliée à la seconde entrée 4 d'une station homologue $ST2_i$ du second anneau $AS_2$. L'entrée d'acquittement 7 de la station $ST_i$ reçoit le signal $N2_{i-1}$ de la station $ST2_{i-1}$ placée directement en amont de la station homologue $ST2_i$. Ce signal $N2_{i-1}$ est issu de la sortie de notification 8 de la station $ST2_{i-1}$.

La sortie 3 de chaque station $ST2_i$ du second anneau $AS_2$ est reliée à l'interface d'entrée $IEM_i$ d'une mémoire associée $M_i$. L'entrée d'acquittement 7 de la station $ST2_i$ est reliée à la sortie d'acquittement $ACK_{i-1}$ de la mémoire $M_{i-1}$ située en aval .

Le signal de notification $N2_i$ délivré par une station $ST2_i$ du second anneau remplace le signal d'acquittement d'une interface parallèle $IE_i$ de la figure 2. De plus, le signal d'acquittement $ACK_{i-1}$ issu de l'interface $IEM_{i-1}$ d'une mémoire $M_{i-1}$ constitue le signal d'acquittement pour la station $ST2_i$ qui est placée directement en aval de cette mémoire et qui appartient au second anneau $AS_2$.

Le fonctionnement du dispositif de la figure 4 peut se déduire aisément de celui déjà décrit en référence à la figure 2. Il peut être résumé de la façon suivante :

- chaque station accorde une priorité absolue à la station amont sur le même anneau ;
- si la station en amont est libre, ou si elle se libère (acceptation de la demande par la mémoire associée ou par la station supérieure associée), un transfert d'une demande dans la station considérée est effectué depuis le premier anneau ou depuis un processeur ;
- si une demande présentée à une mémoire ne lui est pas destinée ou si une demande destinée à une mémoire lui est présentée alors que cette mémoire est occupée, cette demande reste sur l'anneau et sera représentée à la mémoire après un tour complet dans l'anneau ;
- l'indicateur B accompagne chaque demande et permet de déterminer si la station qui le contient est libre ou non.

Il convient de remarquer que selon cette réalisation, la sortie des stations $ST_i$ n'est pas simplement reliée à l'interface d'entrée d'une mémoire. L'anneau supplémentaire permet un comportement plus avantageux dans le cas de demandes décadrées. En effet, initialement ce système autorise pour chaque processeur l'émission de deux demandes successives décadrées. Ensuite les processeurs sont bloqués pendant d cycles de recadrage pendant lesquels toutes les demandes contenues dans les stations se décalent de d étages vers la droite. Puis, deux nouvelles demandes décadrées successives peuvent être émises par les processeurs. Il en résulte que le débit global est amélioré car chaque cycle de recadrage provoque le décalage de deux fois plus de demandes que dans le cas d'un seul anneau.

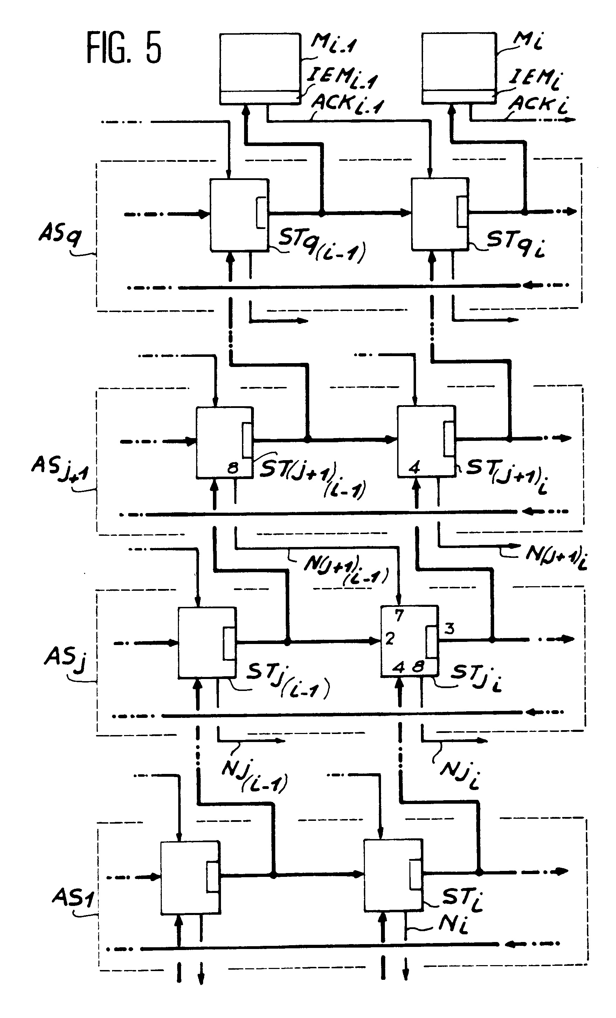

Bien entendu le débit est encore amélioré si l'on augmente le nombre d'anneaux. La figure 5 montre partiellement une réalisation utilisant q anneaux : $AS_1,...AS_j,AS_{j+1},...AS_q$. Ces anneaux sont disposés en q niveaux, l'anneau $AS_1$ du premier niveau étant relié aux processeurs, tandis que l'anneau $AS_q$ du niveau q communique directement avec les mémoires. L'anneau $AS_1$ du premier niveau est le même que précédemment. La disposition du dernier anneau $AS_q$ par rapport aux mémoires est identique à celle de l'anneau $AS_2$ de la figure 4.

Pour faciliter les explications de la figure 5, la notation suivante a été utilisée : chaque station $STj_i$ est identifiée par un double indice $j_i$ où j est le niveau auquel appartient la station, i étant le rang de la station dans son anneau $AS_j$.

Chaque station $STj_i$ d'un niveau intermédiaire j (j différent de q) est associée à une station $ST(j+1)_i$ de même rang i et de niveau supérieur j + 1.

Dans le niveau intermédiaire j , chaque station $STj_i$ a sa sortie 3 reliée à l'entrée 4 de la station associée $ST(j+1)_i$ du niveau supérieur j + 1. La station $STj_i$ reçoit sur son entrée d'acquittement 7 le signal de notification $N(j+1)_{(i-1)}$ issu de la sortie de notification 8 de la station $ST(j+1)_{(i-1)}$ du niveau supérieur j + 1 et située en amont.

Le fonctionnement de ce dispositif se déduit de la figure et des explications déjà données en référence aux figures 2 et 4. Il convient toutefois de remarquer que dans le cas de demandes décadrées, les processeurs seront bloqués pendant d cycles pour l'envoi de q demandes successives par processeur. Nous voyons donc que le débit crète de ce dispositif d'interconnexion augmente avec le nombre de niveaux. Cependant, on ne peut pas augmenter indéfiniment ce nombre, car chaque anneau supplémentaire entraîne une augmentation du temps d'accès mémoire.

Nous avons décrit jusqu'à présent des réalisations où le nombre n de processeurs est égal au nombre de mémoires. Cependant, le système pourrait être adapté à des cas où les nombres sont différents, à condition que le nombre de stations des anneaux soit égal ou supérieur au plus grand des deux nombres de processeurs et de mémoires. Toutefois, les cas où ces nombres sont égaux permettent une utilisation optimale du dispositif d'interconnexion.

Il convient d'attirer l'attention sur le cas particulier où le nombre q de niveau est égal au nombre n de processeurs et au nombre de mémoires.

Cette solution présente la particularité de favoriser les demandes bien cadrées. On peut en effet facilement vérifier que toute demande issue d'un processeur $P_i$ et acceptée par sa mémoire associée $M_i$ provoque immédiatement l'autorisation d'émission du même processeur $P_i$.

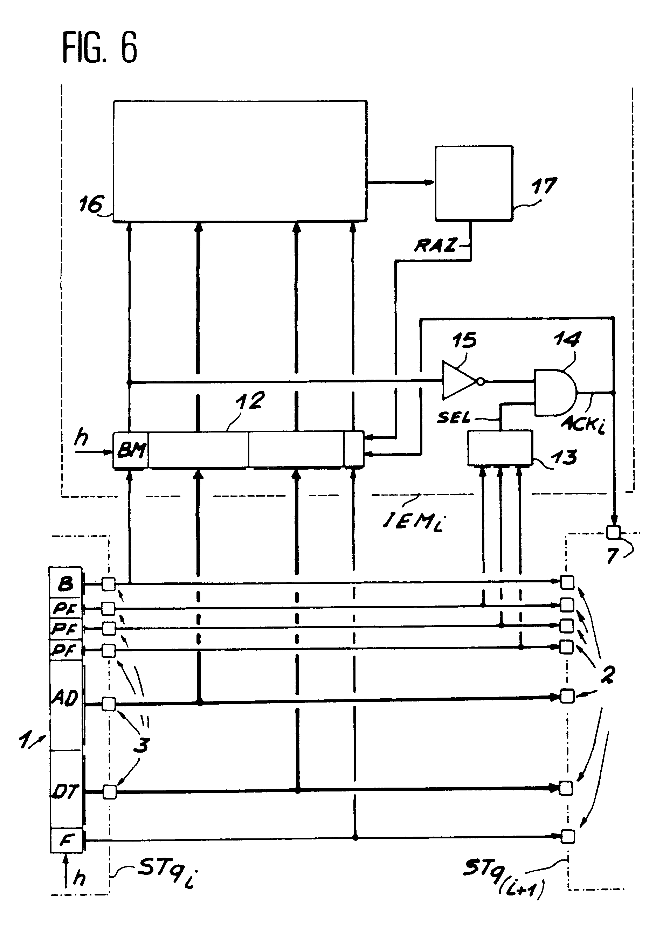

La figure 6 représente en détail les liaisons entre deux stations voisines $STq_i$, $STq_{(i+1)}$ du dernier niveau q avec l'interface d'entrée $IEM_i$ de la mémoire $M_i$. Le registre 1 de la station $STq_i$ est constitué d'une première bascule B affectée à l'indicateur de validité, d'une ou de plusieurs bascules F correspondant au code fonction associé à la demande, de plusieurs bascules DT pour mémoriser une étiquette d'origine ou les données, de plusieurs bascules AD pour mémoriser l'adresse associée à la demande, les poids faibles PF de l'adresse AD servant à identifier la mémoire concernée par l'adresse. Les sorties de ces bascules constituent la sortie 3 de la station $STq_i$. Ces bascules sont commandées par le signal d'horloge h.

L'interface $IEM_i$ comporte un registre d'entrée 12 et un décodeur 13 reliées à la sortie 3. Le décodeur 13 reçoit les poids faibles PF de l'adresse et délivre un signal SEL prenant la valeur 1 logique lorsque les poids faibles PF reçus coïncident avec l'identité de la mémoire $M_i$. Le registre d'entrée 12 reçoit le reste de la demande contenue dans le registre 1. La bascule BM du registre 12 est affectée à l'indicateur B. La sortie de la bascule BM est appliquée à l'entrée d'un inverseur 15 dont la sortie est reliée à une première entrée d'une porte ET 14. La seconde entrée de la porte 14 reçoit le signal SEL issu du décodeur 13. La porte ET 14 délivre le signal d'acquittement $ACK_i$ de la mémoire $M_i$. Le signal $ACK_i$ est appliqué à l'entrée d'acquittement 7 de la station $STq_{(i+1)}$ placée en aval de la station $STq_i$. Grâce à ce circuit d'interface, le signal $ACK_i$ prend la valeur 1 logique lorsque le registre 12 est disponible (BM = 0) alors que la demande est bien destinée à la mémoire $M_i$. (SEL = 1).

Le registre 12 est d'un type classique, comportant des entrées et des sorties parallèles, une entrée d'horloge, une entrée de commande de chargement et une entrée de remise à zéro.

Le registre 12 reçoit le signal d'horloge h sur son entrée d'horloge et le signal $ACK_i$ sur son entrée de commande de chargement. Son entrée de remise à zéro reçoit le signal RAZ d'un circuit de détection de mémoire libre 17. La sortie du registre 12 communique avec l'entrée de la mémoire.

Le circuit d'interface fonctionne de la façon suivante. Lorsque la mémoire se libère, le circuit 17 force le signal RAZ à une valeur logique qui remet à zéro le registre 12. Si une demande contenue dans le registre 1 est destinée à la mémoire, la sortie SEL du décodeur 13 prend la valeur 1. Comme BM vaut 0, la sortie de l'inverseur 15 prend la valeur 1. Il en résulte que $ACK_i$ vaut 1. Le registre 12 est donc autorisé à se charger à l'impulsion d'horloge suivante. Après chargement de la demande, tant que le signal RAZ n'est pas réapparu, BM conserve la valeur de l'indicateur B. Si B valait 0, une nouvelle demande pourra être chargée au cycle suivant, sans attendre la remise à zéro. Si par contre B valait 1, une demande ultérieure ne pourra être prise en compte qu'après l'apparition du signal RAZ.

Nous avons montré dans ce qui précède que l'interconnexion selon l'invention permet de résoudre le problème des demandes décadrées avec une baisse de performance qui peut être limitée en augmentant le nombre d'anneaux. Une autre cause de baisse de débit dans le dispositif d'interconnexion est liée aux problèmes de saturation des anneaux et des conflits mémoire.

Pour remédier à ce problème et selon une caractéristique supplémentaire de l'invention, on prévoit dans l'interface d'entrée $IEM_i$ de chaque mémoire une mémoire tampon 16 du type "premier entré - premier sorti" (FIFO) qui permettra d'absorber les demandes dans la mémoire dans le cas où des demandes trop rapprochées s'adresseraient au même banc physique. La saturation des anneaux sera évitée. On pourra prévoir également un tampon de ce type en sortie des mémoires pour qu'une saturation au niveau des réponses ne provoque pas une saturation des anneaux d'entrée. Les tampons du type "FIFO" étant bien connus en soi, il est inutile d'en donner une description détaillée. On peut toutefois noter que le circuit 17 engendre le signal RAZ en fonction d'un signal indiquant si le tampon 16 est saturé ou non.

Etant donné que le dispositif d'interconnexion de sortie joue un rôle symétrique de celui d'entrée, les solutions décrites précédemment pourront être transposées au dispositif d'interconnexion de sortie. Les réponses des mémoires seront accompagnées d'un indicateur de validité des réponses $B_r$. Ces réponses seront véhiculées par des anneaux de réponses composés des mêmes éléments que les anneaux de demandes décrits précédemment.

Nous avons vu que les stations d'entrée d'un anneau de demande peuvent fonctionner en registre à décalage. Chaque anneau définit donc un sens de circulation des demandes et, par convention, ce sens correspond à l'ordre croissant des indices i des processeurs $P_i$ et des mémoires $M_i$.

Une fois cette convention établie, plusieurs dispositions sont possibles en ce qui concerne les anneaux de réponses.

Selon une première possibilité, on utilise la même disposition que pour les anneaux de demande. Si l'on suppose, pour simplifier le raisonnement, que l'interconnexion d'entrée comporte le même nombre q de niveaux que l'interconnexion de sortie, on constate alors que pour les demandes bien cadrées, le nombre minimum d'étages traversés par les demandes ou par les réponses est égal à q. Or le temps de cycle pour un accès mémoire est égal à la somme du temps de cycle d'une mémoire et d'un temps de transmission d'une demande vers la mémoire et de la réponse vers le processeur qui a émis la demande.

Avec des demandes bien cadrées et en l'absence de saturation, le temps de transmission est donc proportionnel à 2q.

Dans le cas d'une demande décadrée de la valeur d comprise entre 1 et n-1, le nombre d'étages d'entrée à traverser est égal à q + d. Le nombre d'étage de sortie est égal à q + (n-d). On a donc au total n + 2q étages à traverser.

Avec cette solution, le temps de transmission, donc le temps cycle pour un accès mémoire décadré est indépendant du décadrage. Cette propriété peut être avantageuse lorsqu'on souhaite que l'ordre d'arrivée des réponses soit le même que celui des demandes dans le cas d'un décadrage non nul. Par contre, les demandes cadrées sont favorisées en temps de cycle.

Selon une variante, on ne choisit plus le chemin le plus court (q étages) pour relier la sortie

d'une mémoire $M_i$ à son processeur associé $P_i$ mais pour la relier au processeur d'indice supérieur $P_{i+1}$. Dans ce cas, le nombre d'étages de sortie à traverser est égal à n-1-d.

Le temps total de transmission est donc proportionnel à n-1, quel que soit le décadrage d compris entre 0 et n-1. On retrouve l'avantage de la première solution qui s'applique aussi aux demandes cadrées.

Selon une autre solution, le sens de circulation des réponses est inversé, c'est-à-dire qu'il correspond à l'ordre des indices croissants pour les mémoires et à l'ordre des indices décroissants pour les processeurs. Dans ce cas, le nombre d'étages de sortie à traverser est égal à 2q pour les demandes cadrées, si l'on choisit le chemin le plus court pour relier la sortie d'une mémoire $M_i$ à son processeur associé $P_i$. Par contre avec un décadrage d, le nombre d'étages de sortie à traverser est égal à d+q. Le temps total de transmission est donc proportionnel à 2d+2q.

Cette dernière solution permet donc un temps de cycle inférieur par rapport aux solutions précédentes dans les cas, en pratique les plus fréquents, où le décadrage est faible (inférieur à n/2).

Compte tenu de la similitude entre le dispositif d'interconnexion d'entrée et celui de sortie, il est inutile de décrire davantage ce dernier.

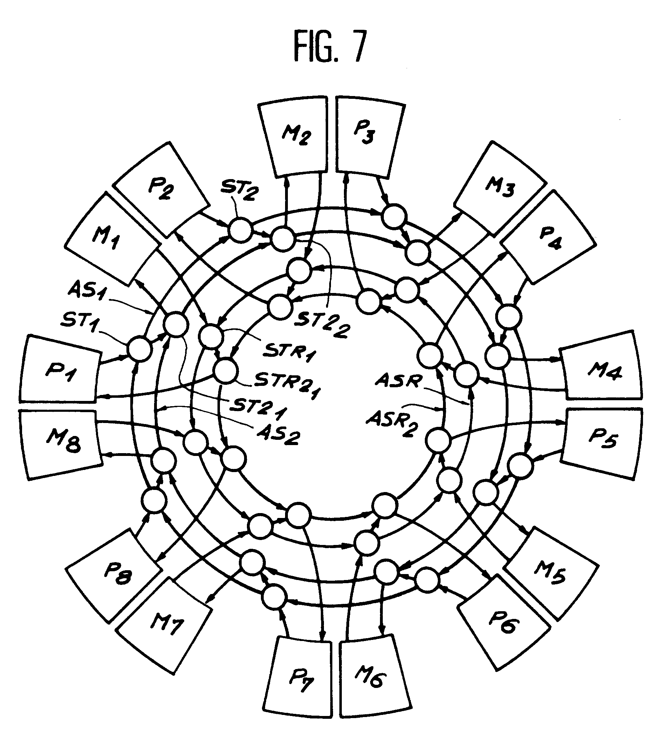

La figure 7 montre un exemple de réalisation complet d'une unité centrale selon l'invention dans le cas où les dispositifs d'interconnexion d'entrée et de sortie comportent chacuns deux anneaux. Nous retrouvons sur cette figure les éléments déjà décrits précédemment, avec les mêmes références. Le sens de circulation des réponses est l'inverse de celui des demandes.

Selon l'exemple décrit, les processeurs et les mémoires sont au nombre de huit. Si l'on considère par exemple le processeur $P_1$, celui-ci transmet ses demandes par l'intermédiaire de la station $ST_1$ de l'anneau $AS_1$. Si la station $ST2_1$ du second anneau est disponible, la demande contenue dans la station $ST_1$ est transmise au cycle suivant à $ST2_1$. Dans le cas contraire, la demande est transmise à la station aval $ST_2$ du premier anneau.

Si une demande contenue dans la station $ST2_1$ est acceptée par la mémoire $M_1$, celle-ci libère la station $ST2_2$. Lorsqu'une réponse est disponible dans l'interface de sortie de la mémoire $M_1$, et si la station $STR_1$ du premier anneau de réponses $ASR_1$ est disponible, cette demande est transférée dans cette station. Si la station $STR2_1$ du deuxième anneau de réponses $ASR_2$ est disponible, cette demande est transférée au cycle suivant dans la station $STR2_1$ qui la présente à l'interface d'entrée du processeur $P_1$.

La figure 7 montre aussi une disposition des processeurs et des mémoires qui facilite la connectique. Cet exemple illustre aussi le caractère modulaire des réalisations permises par l'invention.

## Revendications

1. Unité centrale pour système de traitement de données comportant plusieurs processeurs ($P_i$) reliés à plusieurs mémoires ($M_i$), lesdits processeurs ($P_i$) fonctionnant en émetteurs de demandes alors que les mémoires ($M_i$) fonctionnent en récepteurs desdites demandes, lesdites demandes comportant des informations de commande (F), d'adressage (AD) et éventuellement des données (DT), des moyens d'interconnexion d'entrée (XE) étant prévus pour transmettre auxdites mémoires ($M_i$) les demandes desdits processeurs ($P_i$), des moyens d'interconnexion de sortie (XS) étant prévus pour transmettre auxdits processeurs ($P_i$) les réponses desdites mémoires ($M_i$) auxdites demandes, lesdits moyens d'interconnexion d'entrée (XE) comportant plusieurs interfaces d'entrée parallèles ($IE_i$), chaque interface d'entrée ($IE_i$) fournissant pour chaque demande reçue un signal d'acquittement des demandes ($N2_i$) représentatif de l'acceptation par ladite interface d'entrée de ladite demande reçue, ladite unité centrale étant caractérisée en ce que chaque demande est associée à un indicateur de demande (B) dont la valeur logique est représentative de la validité de la demande associée, en ce que les moyens d'interconnexion d'entrée (XE) comportent des stations d'entrée ($ST_i$) associées chacunes à un processeur ($P_i$) et à une interface d'entrée ($IE_i$) en ce que chaque station ($ST_i$) comporte au moins un registre (1) capable de mémoriser une demande et son indicateur de demande (B) associé, une première entrée (2) d'accès audit registre (1) et une sortie (3) reliée à la sortie dudit registre (1), en ce que lesdites stations ($ST_i$) sont montées en cascade, la sortie de la dernière station ($ST_n$) étant reliée à la première entrée de la première station ($ST_1$) de façon à former un anneau de stations d'entrée ($AS_1$) pouvant fonctionner en registre à décalage rebouclé, en ce que chaque station ($ST_i$) comporte une deuxième entrée (4) reliée à la sortie du processeur associé ($P_i$), en ce que chaque station ($ST_i$) comporte un dispositif de contrôle (5) dont une entrée (6) reçoit l'indicateur de demande (B) contenu dans la station ($ST_{i-1}$) située en amont et dont une seconde entrée (7), appelée entrée d'acquittement, reçoit le signal d'acquittement ($N2_{i-1}$) issu de l'interface ($IE_{i-1}$) associée à ladite station amont ($ST_{i-1}$), le dispositif de contrôle (5) autorisant le transfert dans le registre (1) de la station associée

($ST_i$) :

- soit de la demande et de son indicateur contenus dans la station amont ($ST_{i-1}$) lorsque ladite demande est valide et n'est pas acceptée par l'interface ($IE_{i-1}$) associée à ladite station amont ($ST_{i-1}$),
- soit de la demande et de son indicateur qui sont disponibles en sortie du processeur ($P_i$) associé à ladite station ($ST_i$) dans le cas contraire,

et en ce que ledit dispositif de contrôle (5) comporte une sortie de notification (8) délivrant un signal de notification ($N_i$) pour indiquer au processeur associé ($P_i$) laquelle de ces deux demandes est acceptée.

2. Unité centrale selon la revendication précédente caractérisée en ce que chaque interface parallèle ($IE_i$) est constituée par l'interface d'entrée ($IEM_i$) d'une mémoire ($M_i$).

3. Unité centrale selon la revendication 1 caractérisée en ce que lesdites interfaces parallèles ($IE_i$) sont constituées par un second anneau ($AS_2$), appelé anneau de station intermédiaire ($ST2_i$), identique audit anneau de station d'entrée ($AS_1$), chaque interface ($IE_i$) étant alors constituée par la seconde entrée (4) d'une desdites stations intermédiaires ($ST2_i$), le signal d'acquittement ($N2_i$) étant constitué par le signal de notification de ladite station intermédiaire et en ce que lesdites stations intermédiaires ($ST2_i$) ont leur sortie directement reliée à l'interface d'entrée ($IEM_i$) d'une mémoire associée ($M_i$).

4. Unité centrale selon la revendication 1 caractérisée en ce que ledit dispositif d'interconnexion d'entrée (XE) est formé de plusieurs anneaux ($AS_1$,...$AS_j$,...$AS_q$) de stations ($STj_i$) disposés en autant de niveaux, chaque anneau de station ($AS_j$) étant identique audit anneau de station d'entrée ($AS_1$), ledit anneau de stations d'entrée ($AS_1$) constituant le premier niveau, ladite interface d'entrée parallèle étant alors formée par l'anneau de station ($AS_2$) du second niveau, en ce que pour chaque mémoire ($M_i$) une interface d'entrée mémoire ($IEM_i$) délivre un signal d'acquittement mémoire ($ACK_i$), en ce que chaque station ($STq_i$) du dernier niveau a sa sortie reliée à l'interface d'entrée ($IEM_i$) d'une mémoire associée ($M_i$) et reçoit sur son entrée d'acquittement (7) le signal d'acquittement mémoire ($ACK_{i-1}$) de l'interface d'entrée mémoire ($IEM_{i-1}$) qui est reliée à la station ($STq_{(i-1)}$) dudit dernier niveau et qui est située en amont de ladite station ($STq_i$), en ce que chaque station ($STj_i$) d'un autre niveau a sa sortie (3) reliée à la seconde entrée (4) d'une station ($ST(j+1)_i$) appartenant au niveau directement supérieur et reçoit sur son entrée d'acquittement (7) le signal de notification ($N(j+1)_{(i-1)}$) issu de la station ($ST(j+1)_{(i-1)}$) située en amont de ladite station appartenant audit niveau directement supérieur.

5. Unité centrale selon la revendication (4) caractérisée en ce que les nombres de niveaux, de processeurs et de mémoires sont identiques.

6. Unité centrale selon l'une des revendications précédentes caractérisée en ce que lesdits registres (1) contenus dans lesdites stations ($ST_i$) sont synchronisés par une horloge (h) commune et en ce que chaque processeur ($P_i$) émet des demandes non valides à chaque cycle d'horloge lorsque ledit processeur ($P_i$) n'a aucune demande à émettre.

7. Unité centrale selon l'une des revendications précédentes caractérisée en ce que le dispositif de contrôle (5) d'une station ($ST_i$) comporte un dispositif de sélection (9) comprenant une sortie reliée à l'entrée du registre (1) de la station ($ST_i$) et deux entrées reliées audites première et seconde entrées (2,4) de la station ($ST_i$), en ce que ledit dispositif de contrôle (5) comprend un dispositif de commande (10,11) à deux entrées (6,7), la première entrée (6) recevant l'indicateur de demande (B) contenu dans la station aval ($ST_{i-1}$) et la seconde entrée constituant ladite entrée d'acquittement (7) de la station ($ST_i$), ledit dispositif de commande (10,11) délivrant un signal de sélection (5) pour commander ledit dispositif de sélection (9) de façon à mettre l'entrée dudit registre (1) en communication avec l'une ou l'autre des deux entrées (2,4), ledit signal de sélection (5) étant également transmis à ladite sortie de notification (8) de la station ($ST_i$).

8. Unité centrale selon l'une des revendications précédentes caractérisée en ce que ledit dispositif d'interconnexion de sortie (XS) est identique au dispositif d'interconnexion d'entrée (XE) tel que défini selon l'une des revendications précédentes, les rôles respectifs des processeurs ($P_i$) et des mémoires ($M_i$) étant inversés, les mémoires ($M_i$) fonctionnant en émetteurs de réponses, les processeurs ($P_i$) fonctionnant en récepteurs de réponses, lesdites réponses étant accompagnées d'un indicateur de validité des réponses ($B_r$).

9. Unité centrale selon la revendication 8, caractérisée en ce que l'anneau de station d'entrée

(AS$_1$) définissant un sens de circulation des demandes par rapport aux processeurs et aux mémoires, ledit dispositif d'interconnexion de sortie (XS) étant constitué d'au moins un anneau de réponses (ASR$_1$, ASR$_2$), chaque anneau est disposé de façon à ce que le sens de circulation des réponses soit le même que le sens de circulation des demandes.

10. Unité centrale selon la revendication 8, caractérisée en ce que l'anneau de station d'entrée (AS$_1$) définissant un sens de circulation des demandes par rapport aux processeurs et aux mémoires, ledit dispositif d'interconnexion de sortie (XS) étant constitué d'au moins un anneau de réponses (ASR$_1$, ASR$_2$) chaque anneau est disposé de façon à ce que le sens de circulation des réponses soit inversé par rapport au sens de circulation des demandes.

11. Unité centrale selon l'une des revendications précédentes caractérisée en ce que chaque mémoire (M$_i$) est constituée d'une pluralité de bancs mémoire entrelacés.

12. Unité centrale selon l'une des revendications précédentes caractérisée en ce que l'interface d'entrée (IE$_i$) de chaque mémoire (M$_i$) comporte une mémoire tampon de type "premier arrivé-premier sorti".

13. Unité centrale selon l'une des revendications précédentes caractérisée en ce que chaque processeur (P$_i$) est constitué par une pluralité de processeurs élémentaires pouvant fonctionner en mode "pipeline".

14. Unité centrale selon la revendication précédente caractérisée en ce que les demandes contiennent en parallèle un code de fonction servant à définir l'opération à effectuer dans l'une des mémoires (M$_i$), une information d'adresse, des données dans le cas d'une écriture et une étiquette d'origine dans le cas d'une lecture, ladite étiquette d'origine étant représentative de l'identité du processeur élémentaire qui envoie la demande, et en ce que les réponses contiennent en parallèle une étiquette de destination correspondant à l'étiquette d'origine pour la demande considérée, des données dans le cas d'une lecture ou un compte-rendu d'erreurs.

**Claims**

1. A central unit for a data-processing system comprising several processors (P$_i$) connected to several memories (M$_i$), said processors (P$_i$)

functioning as transmitters of requests while the memories (M$_i$) function as receivers of said requests, said requests comprising command (F), address (AD) and possibly data (DT) information, input interconnection means (XE) being provided to transmit to said memories (M$_i$) the requests of said processors (P$_i$), output interconnection means (XS) being provided to transmit to said processors (P$_i$) the responses of said memories (M$_i$) to said requests, said input interconnection means (XE) comprising several parallel input interfaces (IE$_i$), each input interface (IE$_i$) furnishing for each request received a request acknowledgement signal (N2$_i$) representing the acceptance by said input interface of said request received, said central unit being characterised in that each request is associated with a request indicator (B) whose logic value represents the validity of the associated request, in that the input interconnection means comprise input stations (ST$_i$) each associated with a processor (P$_i$) and with an input interface (IE$_i$), in that each station comprises at least one register (1) capable of memorising a request and its associated request indicator (B), a first access input (2) to said register (1) and an output (3) connected to the output of said register (1), in that said stations (ST$_i$) are mounted in cascade, the output of the last station (ST$_n$) being connected to the first input of the first station (ST$_1$) so as to form a ring of input stations (AS$_1$) able to function as a fed back shift register, in that each station (ST$_i$) comprises a second input (4) connected to the output of the associated processor (P$_i$), in that each station (ST$_i$) comprises a control device (5) the input (6) of which receives the request indicator (B) contained in the station (ST$_{i-1}$) located upstream and a second input (7) of which, called an acknowledgement input, receives the acknowledgement signal (N2$_{i-1}$) output from the interface (IE$_{i-1}$) associated with said station upstream (ST$_{i-1}$), the control device (5) authorising the transfer into the register (1) of the associated station (ST$_i$):
   - either of the request and its indicator contained in the station upstream (ST$_{i-1}$) when said request is valid and is not accepted by the interface (IE$_{i-1}$) associated with said station upstream (ST$_{i-1}$),
   - or of the request and its indicator which are available at the output of the processor (P$_i$) associated with said station (ST$_i$) in the opposite case,

   and in that said control device (5) includes a notification output (8) giving a notification signal (N$_i$) to indicate to the associated proces-

sor (P$_i$) which of these two requests is accepted.

2. A central unit according to the preceding claim characterised in that each parallel interface (IE$_i$) is constituted by the input interface (IEM$_i$) of a memory (M$_i$).

3. A central unit according to claim 1 characterised in that said parallel interfaces (IE$_i$) are constituted by a second ring (AS$_2$), called an intermediate station (ST2$_i$) ring, identical to said input station ring (AS$_i$), each interface (IE$_i$) then being constituted by the second input (4) of one of said intermediate stations (ST2$_i$), the acknowledgement signal (N2$_i$) being constituted by the notification signal of said intermediate station and in that said intermediate stations (ST2$_i$) have their output connected directly to the input interface (IEM$_i$) of an associated memory (M$_i$).

4. A central unit according to claim 1 characterised in that said input interconnection device (XE) is made up of several rings (AS$_1$,...AS$_i$,...AS$_q$) of stations (STj$_i$) arranged in as many stages, each station ring (AS$_j$) being identical to said input station ring (AS$_1$), said input station ring (AS$_1$) constituting the first stage, said parallel input interface then being formed by the station ring (AS$_2$) of the second stage, in that for each memory (M$_i$) a memory input interface (IEM$_i$) gives a memory acknowledgement signal (ACK$_i$), in that each station (ST$_{qi}$) of the last stage has its output connected to the input interface (IEM$_i$) of an associated memory (M$_i$) and receives at its acknowledgement input (7) the memory acknowledgement signal (ACK$_{i-1}$) of the memory input interface (IEM$_i$) which is connected to the station (STq$_{(i-1)}$) of said last stage and which is located upstream from said station (STqi), in that each station (STj$_i$) of another stage has its output (3) connected to the second input (4) of a station (ST(j+1)$_i$) belonging to the stage directly above and receives at its acknowledgement input (7) the notification signal (N(j+1)$_{(i-1)}$) output from the station (ST(j+1)$_{(i-1)}$) located upstream from said station belonging to said stage directly above.

5. A central unit according to claim 4 characterised in that the numbers of stages, processors and memories are identical.

6. A central unit according to one of the preceding claims characterised in that, said registers (1), contained in said stations (ST$_i$) are synchronised by a common clock (h) and in that each processor (P$_i$) issues invalid requests at each clock cycle when said processor (P$_i$) has no request to issue.

7. A central unit according to one of the preceding claims characterised in that the control device (5) of a station (ST$_i$) comprises a selection device (9) comprising an output connected to the input of the register (1) of the station (ST$_i$) and two inputs connected to said first and second inputs (2, 4) of the station (ST$_i$), in that said control device (5) comprises a command device (10, 11) with two inputs (6, 7), the first input (6) receiving the request indicator (B) contained in the station downstream (ST$_{i-1}$) and the second input constituting said acknowledgement input (7) of the station (ST$_i$), said command device (10, 11) giving a selection signal (5) to control said selection device (9) so as to put the input of said register (1) in communication with one or the other of the two inputs (2, 4), said selection signal (5) also being transmitted to said notification output (8) of the station (ST$_i$).

8. A central unit according to one of the preceding claims characterised in that said output interconnection device (XS) is identical to the input interconnection device (XE) as defined in one of the preceding claims, the respective roles of the processors (P$_i$) and the memories (M$_i$) being reversed, the memories (M$_i$) functioning as transmitters of responses, the processors (P$_i$) functioning as receivers of responses, said responses being accompanied by a response validity indicator (B$_r$).

9. A central unit according to claim 8, characterised in that the input station ring (AS$_1$) defining a circulation direction for the requests in relation to the processors and to the memories, said output interconnection device (XS) being constituted by at least one response ring (ASR$_1$, ASR$_2$), each ring is arranged so that the circulation direction of the responses is the same as the circulation direction of the requests.

10. A central unit according to claim 8, characterised in that the input station ring (AS$_1$) defining a circulation direction for the requests in relation to the processors and to the memories, said output interconnection device (XS) being constituted by at least one response ring (ASR$_1$, ASR$_2$), each ring is arranged so that the circulation direction of the responses is reversed in relation to the traffic direction of the requests.

11. A central unit according to one of the preceding claims characterised in that each memory ($M_i$) is constituted by a plurality of interlaced memory banks.

12. A central unit according to one of the preceding claims characterised in that the input interface ($IE_i$) of each memory ($M_i$) includes a First In-First Out type memory buffer.

13. A central unit according to one of the preceding claims characterised in that each processor ($P_i$) is constituted by a plurality of basic processors able to function in a "pipeline" mode.

14. A central unit according to the preceding claim characterised in that the requests contain in parallel a function code serving to define the operation to be performed in one of the memories ($M_i$), address information, data in the case of a write and a tag of origin in the case of a read, with said tag of origin representing the basic processor that sends the request, and in that the responses contain in parallel a destination tag corresponding to the tag of origin for the request in question, data in the case of a read or an error report.

**Patentansprüche**

1. Zentraleinheit für Datenverarbeitungssystem, mit mehreren Prozessoren ($P_i$), die mit mehreren Speichern ($M_i$) verbunden sind, wobei die Prozessoren ($P_i$) als Sender von Anforderungen arbeiten, während die Speicher ($M_i$) als Empfänger der Anforderungen arbeiten, wobei die Anforderungen Befehlsinformationen (F) und Adressierungsinformationen (AD) sowie eventuell Daten (DT) enthalten, wobei Eingangsverbindungsmittel (XE) vorgesehen sind, um die Anforderungen der Prozessoren ($P_i$) an die Speicher ($M_i$) zu übertragen, wobei Ausgangsverbindungsmittel (XS) vorgeshen sind, um die Antworten der Speicher ($M_i$) auf die Anforderungen an die Prozessoren ($P_i$) zu übertragen, wobei die Eingangverbindungsmittel (XE) mehrere parallele Eingangsschnittstellen ($IE_i$) enthalten, wobei jede Eingangsschnittstelle ($IE_i$) für jede empfangene Anforderung ein Anforderungs-Quittierungssignal ($N2_i$) ausgibt, das die Annahme der empfangenen Anforderung von der Eingangsschnittstelle darstellt, wobei die Zentraleinheit dadurch gekennzeichnet ist daß jede Anforderung einem Anforderungszeiger (B) zugeordnet ist, dessen logischer Wert die Gültigkeit der zugehörigen Anforderung anzeigt, daß die Eingangsverbindungmittel (XE) Eingangsstationen ($ST_j$) enthalten, die jeweils einem Prozessor ($P_i$) und mit einer Eingangsschnittstelle ($IE_i$) zugeordnet sind, daß jede Station ($ST_i$) wenigstens ein Register (1), das eine Anforderung und deren zugehörigen Anforderungszeiger (B) speichern kann, einen ersten Eingang (2) für den Zugriff auf das Register (1) sowie einen Ausgang (3) enthält, der mit dem Ausgang des Registers (1) verbunden ist, daß die Stationen ($ST_i$) in Kaskade geschaltet sind, wobei der Ausgang der letzten Station ($ST_n$) mit dem ersten Eingang der ersten Station ($ST_1$) verbunden ist, derart, daß ein Ring von Eingangsstationen ($AS_1$) gebildet wird, der als Schleifen-Schieberegister arbeiten kann, daß jede Station ($ST_i$) einen zweiten Eingang (4) enthält, der mit dem Ausgang des zugehörigen Prozessors ($P_i$) verbunden ist, daß jede Station ($ST_i$) eine Steuereinrichtung (5) enthält wovon ein Eingang (6) den Anforderungszeiger (B) empfängt, der in der eingangsseitig befindlichen Station ($ST_{i-1}$) enthalten ist, und wovon ein zweiter Eingang (7), der Quittierungseingang genannt wird, das Quittierungssignal ($N2_{i-1}$) empfängt, das von der Schmittstelle ($IE_{i-1}$) ausgegeben wird, welche der genannten eingangsseitigen Station ($ST_{i-1}$) zugehört, wobei die Steuereinrichtung (5):

- entweder die Übertragung der Anforderung und ihres Zeigers, die in der eingangsseitigen Station ($ST_{i-1}$) enthalten sind, wenn die Anforderung gültig ist und von der der eingangsseitigen Station ($ST_{i-1}$) zuhörigen Schnittstelle ($IE_{i-1}$) nicht akzeptiert wird,
- oder im entgegengesetzten Fall die Übertragung der Anforderung und ihres Zeigers, die am Ausgang des der Station ($ST_{i-1}$) zugehörigen Prozessors ($P_i$) zur Verfügung stehen,

in das Register (1) der zugehörigen Station ($ST_i$) zuläßt,

und daß die Steuereinrichtung (5) einen Meldeausgang (8) enthält, der ein Meldesignal ($N_i$) ansgibt, um dem zugehörigen. Prozessor ($P_i$) anzuzeigen, welche dieser beiden Anforderungen akzeptiert wird.

2. Zentraleinheit gemäß dem vorangehenden Anspruch, dadurch gekennzeichnet, daß jede parallele Schnittstelle ($IE_i$) durch die Eingangsschnittstelle ($IEM_i$) eines Speichers ($M_i$) gebildet ist.

3. Zentraleinheit gemäß Anspruch 1, dadurch gekennzeichnet, daß die parallelen Schnittstellen

(IE$_i$) von einem zweiten Ring (AS$_2$) gebildet sind, der Zwischenstationen-Ring (ST2$_i$) genannt wird und dem Eingangsstationen-Ring (AS$_1$) völlig gleich ist, wobei jede Schnittstelle (IE$_i$) dann durch den zweiten Eingang (4) einer der Zwischenstationen (ST2$_i$) gebildet ist, wobei das Quittierungssignal (N2$_i$) durch das Meldesignal der Zwischenstation gebildet ist, und daß die Zwischenstationen (ST2$_i$) mit ihrem Ausgang direkt mit der Eingangsschnittstelle (IEM$_i$) eines zugehörigen Speichers (M$_i$) verbunden sind.

4. Zentraleinheit gemäß Anspruch 1, dadurch gekennzeichnet daß die Eingangsverbindungseinrichtung (XE) aus mehreren Ringen (AS$_1$,...AS$_j$,...AS$_q$) von Stationen (STj$_i$) gebildet ist, die auf ebensovielen Niveaus angeordnet sind, wobei jeder Stationen-Ring (AS$_j$) mit dem Eingangsstationen-Ring (AS$_1$) völlig gleich ist, wobei der Eingangsstationen-Ring (AS$_1$) das erste Niveau bildet, wobei dann die parallele Eingangsschnittstelle durch den Stationen-Ring (AS$_2$) des zweiten Niveaus gebildet ist, daß für jeden Speicher (M$_i$) eine Speicher-Eingangsschnittstelle (IEM$_i$) ein Speicher-Quittierungssignal (ACK$_i$) ausgibt, daß jede Station (STq$_i$) des letzten Niveaus mit ihrem Ausgang mit der Eingangsschnittstelle (IEM$_i$) eines zugehörigen Speichers (M$_i$) verbunden ist und an ihrem Quittierungseingang (7) das Speicher-Quittierungssignal (ACK$_{i-1}$) derjenigen Speicher-Eingangsschnittstelle (IEM$_{i-1}$) empfängt, die mit der Station (STq$_{(i-1)}$) des letzten Niveaus verbunden ist und sich eingangsseitig von der genannten Station (STq$_i$) befindet, daß jede Station (STj$_i$) eines anderen Niveaus mit ihrem Ausgang (3) mit dem zweiten Eingang (4) einer Station (ST(j+1)$_i$) verbunden ist, die dem direkt darüber befindlichen Niveau zugehört und an ihrem Quittierungseingang (7) das Meldesignal (N(j+1)$_{(i-1)}$) empfängt, das von der Station (ST(j+1)$_{(i-1)}$) ausgegeben wird, die sich eingangsseitig von der Station befindet, die dem direkt darüber befindlichen Niveau zugehört

5. Zentraleinheit gemäß Anspruch 4, dadurch gekennzeichnet, daß die Anzahl der Niveaus, die Anzahl der Prozessoren und die Anzahl der Speicher gleich sind.

6. Zentraleinheit gemäß einem der vorangehenden Ansprüche, dadurch gekennzeichnet, daß die in den Stationen (ST$_i$) enthaltenen Register (1) durch einen gemeinsamen Takt (h) synchronisiert sind und daß jeder Prozessor (P$_i$) in jedem Taktzyklus ungültige Anforderungen sendet, wenn der Prozessor (P$_i$) keinerlei Anforderung auszusenden hat.

7. Zentraleinheit gemäß einem der vorangehenden Ansprüche, dadurch gekennzeichnet, daß die Steuereinrichtung (5) einer Station (ST$_i$) eine Wähleinrichtung (9) enthält, die einen mit dem Eingang des Registers (1) der Station (ST$_i$) verbundenen Ausgang sowie zwei mit dem ersten Eingang (2) und mit dem zweiten Eingang (4) der Station (ST$_i$) verbundene Eingänge aufweist daß die Steuereinrichtung (5) eine Befehlseinrichtung (10, 11) mit zwei Eingängen (6, 7) enthält, wovon der erste Eingang (6) den in der ausgangsseitigen Station (ST$_{i-1}$) enthaltenen Anforderungszeiger (B) empfängt und der zweite Eingang den Quittierungseingang (7) der Station (ST$_i$) bildet, wobei die Befehlseinrichtung (10, 11) ein Wählsignal (5) ausgibt, um die Wähleinrichtung (9) so zu steuern, daß sie zwischen dem Eingang des Registers (1) und dem einen oder dem anderen der beiden Eingänge (2, 4) eine Verbindung herstellt, wobei das Wählsignal (5) außerdem an den Meldeausgang (8) der Station (ST$_i$) übertragen wird.

8. Zentraleinheit gemäß einem der vorangehenden Ansprüche, dadurch gekennzeichnet, daß die Ausgangsverbindungseinrichtung (XS) mit der Eingangsverbindungseinrichtung (XE), wie sie in einem der vorangehenden Ansprüche definiert ist, völlig gleich ist wobei die jeweiligen Rollen der Prozessoren (P$_i$) und der Speicher (M$_i$) umgekehrt sind, wobei die Speicher (M$_i$) als Sender von Antworten arbeiten, wobei die Prozessoren (P$_i$) als Empfänger von Antworten arbeiten und wobei die Antworten von einem Antwort-Gültigkeitszeiger (B$_r$) begleitet werden.

9. Zentraleinheit gemäß Anspruch 8, dadurch gekennzeichnet, daß dann, wenn der Eingangsstationen-Ring (AS$_1$) in bezug auf die Prozessoren und die Speicher eine Anforderungs-Umlaufrichtung definiert und die Ausgangsverbindungseinrichtung (XS) von wenigstens einem Antwortring (ASR$_1$, ASR$_2$) gebildet ist, jeder Ring so angeordnet ist daß die Antwort-Umlaufrichtung gleich der Anforderungs-Umlaufrichtung ist.

10. Zentraleinheit gemäß Anspruch 8, dadurch gekennzeichnet, daß dann, wenn der Eingangsstationen-Ring (AS$_1$) in bezug auf die Prozessoren und die Speicher eine Anforderungs-Umlaufrichtung definiert und die Ausgangsverbindungseinrichtung (XS) von wenigstens ei-

nem Antwortring (ASR$_1$, ASR$_2$) gebildet ist, jeder Ring so angeordnet ist, daß die Antwort-Umlaufrichtung der Anforderungs-Umlaufrichtung entgegengesetzt ist.

11. Zentraleinheit gemäß einem der vorangehenden Ansprüche, dadurch gekennzeichnet, daß jeder Speicher (M$_i$) aus mehreren verschachtelten Speichebänken gebildet ist.

12. Zentraleinheit gemäß einem der vorangehenden Ansprüche, dadurch gekennzeichnet, daß die Eingangsschnittstelle (IE$_i$) eines jeden Speichers (M$_i$) ein Pufferspeicher vom FIFO-Typ ist.

13. Zentraleinheit gemäß einem der vorangehenden Ansprüche, dadurch gekennzeichnet, daß jeder Prozessor (P$_i$) von mehreren Elementarprozessoren gebildet ist, die in der "Pipeline"-Betriebsart arbeiten können

14. Zentraleinheit gemäß dem vorangehenden Anspruch, dadurch gekennzeichnet, daß die Anforderungen parallel einen Funktionseode, der dazu dient, die in einem der Speicher (M$_i$) anszuführende Operation zu definieren, eine Adresseninformation, bei einem Schreibvorgang Daten sowie bei einem Lesevorgang eine Herkunftskennung enthalten, wobei die Herkunftskennung die Identität des die Anforderung aussendenden Elementarprozessors angibt, und daß die Antworten parallel eine Bestimmungskennung, die für die betrachtete Anforderung der Herkunftskennung entspricht, und bei einem Lesevorgang Daten oder aber einen Fehlerbericht enthalten.

FIG. 1

FIG. 3

FIG. 2

FIG. 4

EP 0 369 843 B1

# FIG. 5

# FIG. 6

# FIG. 7